# EUROPÄISCHE PATENTSCHRIFT

(11) **EP 2 527 703 B1**
(45) Veröffentlichungstag und Bekanntmachung des Hinweises auf die Patenterteilung: **08.10.2014**
(21) Anmeldenummer: 12001339.6
(22) Anmeldetag: 29.02.2012
(51) Int. Cl.: F16L 53/00

(54) **Fluidleitung**
Fluid conduit
Conduite de fluide

(30) Priorität: 20.05.2011 DE 102011102148
(43) Veröffentlichungstag der Anmeldung: 28.11.2012
(73) Patentinhaber: NORMA Germany GmbH, 63477 Maintal (DE)
(72) Erfinder: Eckardt, Carsten, 63486 Bruchköbel (DE); Mann, Stephan, 63599 Biebergemünd (DE); Rastetter, Marc, 63599 Biebergemünd (DE); Read, Cameron, 63454 Hanau (DE); Seibel, Knut, 63674 Altenstadt (DE)
(74) Vertreter: Knoblauch, Andreas

(56) Entgegenhaltungen:
- EP-A2- 0 068 688
- EP-A2- 1 070 642
- DE-A1- 3 414 284
- US-A1- 2009 034 949

## Beschreibung

Die Erfindung betrifft eine Fluidleitung mit einem Rohr, einem Verbinder, der einen Anschlussstutzen aufweist und der an einem Ende des Rohres angeordnet ist, und einer Heizeinrichtung, die zumindest einen Teil des Rohres und zumindest einen Teil des Verbinders beheizt, wobei der Anschlussstutzen einen Teil eines Durchgangskanals durch den Verbinder umgibt.

Eine derartige Fluidleitung ist aus EP 1 070 642 A2 bekannt. Hier ist die Heizeinrichtung als Heizleiter ausgebildet, der durch einen seitlichen Anschlussstutzen in den Durchgangskanal geführt ist.

Die Erfindung wird im Folgenden anhand einer Fluidleitung erläutert, die verwendet wird, um Harnstoff von einem Vorratsbehälter zu einer Verbrauchsstelle zu transportieren. Harnstoff (Urea) wird bei Dieselmotoren verwendet, um die Emission von Stickoxiden zu verringern.

Wenn eine derartige Fluidleitung in einem Kraftfahrzeug eingebaut ist, dann besteht bei niedrigen Außentemperaturen die Gefahr, dass der Harnstoff in der Fluidleitung einfriert, so dass er nicht mehr fließen kann. Es ist daher bekannt, die Fluidleitung zu beheizen. Dabei wird nicht nur das Rohr beheizt, sondern man versucht auch, den Verbinder zu beheizen.

Harnstoff wird bei einer Temperatur von minus 11° C fest, friert also ein und verhindert das weitere Fließen von Harnstoff von einem Tank zu einer Verbrauchsstelle, beispielsweise einer Einspritzpumpe. Um bestimmten Normen zu genügen, muss die Heizeinrichtung in der Lage sein, den Harnstoff in der Fluidleitung innerhalb einer gewissen Zeit aufzutauen. Dies erfordert eine gewisse Heizleistung, so dass die Heizeinrichtung entsprechend groß dimensioniert werden muss. Dies erhöht die Masse des Fahrzeugs und vergrößert den Energieverbrauch.

Während das Rohr in der Regel eine gewisse Flexibilität aufweist, so dass es die mit dem Einfrieren der Flüssigkeit innerhalb der Fluidleitung verbundene Volumenvergrößerung in der Regel problemlos aufnehmen kann, ist der Verbinder meistens nicht so nachgiebig. Es besteht also die Gefahr, dass der Verbinder durch Einfrieren der Flüssigkeit beschädigt wird.

Der Erfindung liegt die Aufgabe zugrunde, eine beheizbare Fluidleitung anzugeben, die auch bei kalten Außentemperaturen schnell betriebsbereit ist.

Diese Aufgabe wird bei einer Fluidleitung der eingangs genannten Art dadurch gelöst, dass der Durchgangskanal zumindest auf einem Teil seiner Länge einen Strömungsquerschnitt aufweist, der maximal 60 % des Strömungsquerschnitts des Rohres beträgt.

Die durch die Fluidleitung strömende Flüssigkeit kann maximal den Strömungsquerschnitt ausfüllen. Wenn der Strömungsquerschnitt innerhalb des Verbinders kleiner ist, dann bedeutet dies, dass an dieser Stelle auch weniger Flüssigkeit vorhanden ist, die einfrieren kann. Je kleiner das Volumen der Flüssigkeit ist, die einfrieren kann, desto schneller kann dieses Flüssigkeitsvolumen aufgetaut werden. Darüber hinaus ist die Volumenvergrößerung beim Einfrieren der Flüssigkeit auch abhängig vom Flüssigkeitsvolumen. Ein kleineres Volumen dehnt sich absolut weniger stark aus als ein größeres Volumen. Die Gefahr einer Beschädigung des Verbinders durch Flüssigkeit, die sich beim Einfrieren ausdehnt, wird dadurch kleiner gehalten.

Bevorzugterweise beträgt der Strömungsquerschnitt des Durchgangskanals auf dem Teil der Länge maximal 50 % des Strömungsquerschnitts des Rohres. Man kann den Strömungsquerschnitt des Durchgangskanals auf dem infrage stehenden Teil der Länge also nur halb so groß machen, wie der Strömungsquerschnitt des Rohres. Dadurch wird das Volumen der Flüssigkeit klein gehalten, das im Verbinder einfrieren kann und aufgetaut werden muss. Gleichzeitig wird aber ein ausreichender Strömungsquerschnitt bereitgestellt, so dass die Flüssigkeit auch den Verbinder ohne nennenswerten Widerstand durchströmen kann.

Bevorzugterweise ist die Heizeinrichtung als Heizstab ausgebildet, der aus dem Rohr in den Anschlussstutzen des Verbinders geführt ist und den Strömungsquerschnitt des Durchgangskanals im Inneren des Anschlussstutzens verringert. Der Heizstab erfüllt damit zwei Funktionen. Zum einen ist er in der Lage, Wärme zu erzeugen, die dann unmittelbar in die in der Fluidleitung vorhandene Flüssigkeit eingetragen werden kann. Es ist also nicht erforderlich, dass diese Wärme noch das Material des Verbinders oder des Rohres durchdringen muss. Zum anderen füllt der Heizstab einen Teil des freien Raumes im Inneren des Verbinders aus. Dort, wo der Heizstab vorhanden ist, kann keine Flüssigkeit vorhanden sein und einfrieren.

Vorzugsweise ist der Heizstab biegbar ausgebildet. Damit hat der Heizstab den Vorteil, dass er auch in einem Rohr eingesetzt werden kann, das keinen geradlinigen Verlauf hat. Zum anderen hat diese Ausbildung den Vorteil, dass der Heizstab seitlich aus dem Verbinder herausgeführt werden kann, wenn der Durchgangskanal einen geradlinigen Verlauf hat. In diesem Fall füllt der Heizstab zwar nicht den gesamten Durchgangskanal teilweise aus, sondern nur einen Teil der Länge des Durchgangskanals. Dies ist aber unkritisch, weil der Heizstab nur ein relativ kleines Volumen von Flüssigkeit auftauen muss. Sobald die Flüssigkeit aufgetaut ist, kann sie Wärme zu eingefrorenen Bereichen der Flüssigkeit transportieren, so dass ein entsprechend kurzes Auftauen erreicht werden kann.

Bevorzugterweise weist der Verbinder einen Heizmittel-Austrittskanal auf, der mit dem Durchgangskanal einen Winkel ungleich 0° einschließt, wobei im Durchgangskanal ein Rampenelement angeordnet ist, das eine aus dem Durchgangskanal zum Heizmittel-Austrittskanal weisende Führungsfläche aufweist und den Querschnitt des Durchgangskanals jenseits des Anschlussstutzens vermindert. Das Rampenelement hat ebenfalls zwei Funktionen. Wenn der Heizstab durch den Anschlussstutzen in das Innere des Verbinders eingeführt wird, wird er durch die Führungsfläche in den Heizmittel-Austrittskanal umgelenkt, so dass er nicht zu einer Anschlussgeometrie gelangt und dort das Herstellen einer Verbindung zwischen dem Verbinder und einem Gegenelement stört. Zum anderen trägt das Rampenelement auch zu einer Volumenverminderung im Inneren des Verbinders bei. Dort, wo sich das Rampenelement befindet, kann sich keine Flüssigkeit mehr befinden, die einfrieren kann. Das Rampenelement befindet sich an einer Position, an der der Heizstab bereits abgelenkt worden ist, so dass er nicht mehr unmittelbar zum Beheizen der Flüssigkeit im Inneren des Verbinders zur Verfügung steht. Dementsprechend schafft das Rampenelement auch im Hinblick auf die Verringerung des zu beheizenden Flüssigkeitsvolumens günstige Bedingungen.

Vorzugsweise füllt das Rampenelement den Durchgangskanal in einer Ebene, die durch den Durchgangskanal und den Heizmittel-Austrittskanal aufgespannt ist, aus und lässt in einer Ebene senkrecht dazu einen Strömungsquerschnitt im Durchgangskanal frei. Der Durchgangskanal wird durch das Rampenelement sozusagen in zwei Hälften aufgeteilt, die sich parallel zur Strömungsrichtung links und rechts des Durchgangselements befinden. Hier steht ein ausreichender Strömungsquerschnitt für die Flüssigkeit zur Verfügung. Dazwischen ist der Strömungskanal aber durch das Rampenelement vollständig ausgefüllt, so dass sich hier keine Flüssigkeit mehr ansammeln kann.

Vorzugsweise weist das Rampenelement eine Breite auf, die maximal 50 % der größten Breite des Durchgangskanals im Bereich des Rampenelements entspricht. Damit bleiben weitere 50 % der Breite für die Durchströmung der Flüssigkeit frei, werden also nicht durch das Rampenelement blockiert. Auch dann, wenn der Querschnitt des Durchgangskanals kreisförmig ist und das Rampenelement im Bereich des größten Durchmessers angeordnet ist, steht eine ausreichende Querschnittsfläche zur Verfügung, um die Flüssigkeit durch den Verbinder hindurchströmen zu lassen. Die Breite von maximal 50 % reicht allerdings aus, um eine ausreichend breite Führungsfläche für die Spitze des Heizmittels zu bieten, das durch das Rampenelement zum Heizmittel-Austrittskanal abgelenkt werden soll.

Vorzugsweise ist das Rampenelement einstückig mit dem Verbinder ausgebildet. Das Rampenelement kann beispielsweise mit dem Verbinder einstückig gespritzt sein, wenn der Verbinder als Spritzgussteil ausgebildet ist. Damit ist für die Herstellung und das Einbringen des Rampenelements in den Verbinder praktisch kein zusätzlicher Aufwand mehr erforderlich. Gleichzeitig wird das Rampenelement an beiden Enden der Führungsfläche mit dem Gehäuse verbunden, so dass die Führungsfläche mit ausreichenden Kräften so weit festgehalten wird, dass die Spitze des Heizmittels auf ihr entlang gleiten kann, ohne dass die Führungsfläche verlagert wird. Insbesondere kann die Führungsfläche nicht so kippen, dass die Führung der Spitze des Heizmittels in den Heizmittel-Austrittskanal unterbrochen wird.

Bevorzugterweise ist zwischen einer den Durchgangskanal innerhalb des Anschlussstutzens begrenzenden Umfangswand und dem Heizstab ein Spalt mit einer maximalen Erstreckung von 1 mm senkrecht zu einer Achse des Durchgangskanals vorgesehen. Damit hat eine Flüssigkeitsschicht zwischen dem Heizstab und dem Anschlussstutzen bzw. eine entsprechende Eisschicht eine Dicke von maximal 1 mm. Sie kann dementsprechend schnell aufgetaut werden.

Die Erfindung wird im Folgenden anhand eines bevorzugten Ausführungsbeispielen in Verbindung mit der Zeichnung beschrieben. Hierin zeigen:
- Fig. 1: einen schematischen Längsschnitt durch einen Verbinder mit einem verbundenen Rohr,
- Fig. 2: einen Schnitt II-II nach Fig. 1 und
- Fig. 3: einen Schnitt durch eine abgewandelte Ausführungsform eines Verbinders.

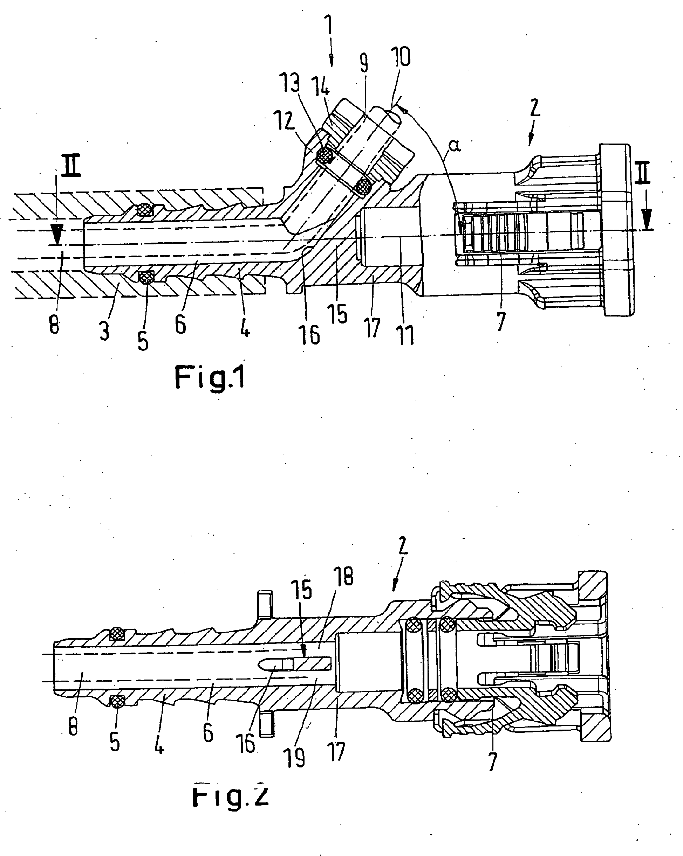

Fig. 1 zeigt eine beheizbare Fluidleitung 1 mit einem Verbinder 2 und einem Rohr 3. Das Rohr ist flexibel. Es kann aus einem extrudierten Kunststoff oder auch aus einem Schlauchmaterial gebildet sein. Auch ein Schlauch soll im Folgenden unter den Begriff "Rohr" fallen.

Das Rohr 3 ist auf einen Anschlussstutzen 4 des Verbinders aufgesteckt und dort mit einem O-Ring 5 abgedichtet. Der Anschlussstutzen 4 weist auf seiner Außenseite ein Tannenbaumprofil auf. Falls erforderlich, kann das Rohr 3 auf dem Anschlussstutzen 4 auch mit Hilfe eines Spannelements, beispielsweise einer Schlauchschelle oder dergleichen, festgehalten werden.

Durch den Anschlussstutzen 4 ist ein Durchgangskanal 6 geführt, der durch den gesamten Verbinder hindurch geradlinig verläuft und, wie dies in Fig. 2 zu erkennen ist, bis zu einer Anschlussgeometrie 7 geführt ist. Mit der Anschlussgeometrie 7 kann der Verbinder 2 an einem Verbindungsstutzen einer anderen Leitung, eines Tanks oder eines Aggregats befestigt werden. Die genaue Form der Anschlussgeometrie 7 spielt im vorliegenden Fall keine Rolle. Sie sollte aber so ausgebildet sein, dass eine Verbindung zwischen dem Verbinder 2 und einem Verbindungsstutzen eine ausreichende Festigkeit und Dichtigkeit aufweist.

Im freien Querschnitt des Rohres 3 ist ein gestrichelt dargestelltes Heizmittel 8 angeordnet. Das Heizmittel 8 ist im vorliegenden Fall als flexibler Heizstab ausgebildet, der mindestens einen Heizleiter aufweist, der in ein extrudiertes Kunststoffmaterial eingebettet ist. Vorzugsweise sind zwei Heizleiter vorgesehen, die an einem vom Verbinder 2 entfernten Ende miteinander verbunden sind, so dass eine elektrische Versorgung nur an einem Ende des Heizmittels notwendig ist. Das Heizmittel 8 ist zwar flexibel und biegbar. Es weist aber eine gewisse Eigensteifigkeit auf, so dass das Heizmittel dann, wenn das Rohr 3 (mit darin befindlichem Heizmittel) auf den Anschlussstutzen 4 aufgeschoben wird, das Heizmittel 8 in den Durchgangskanal 6 im Anschlussstutzen 4 eingeschoben werden kann.

Das Heizmittel 8 sollte den Verbinder 2 verlassen, bevor es die Anschlussgeometrie 7 erreicht, um eine mithilfe der Anschlussgeometrie 7 hergestellt Verbindung nicht zu stören. Dementsprechend weist der Verbinder einen Heizmittel-Austrittskanal 9 auf, dessen Längsachse 10 unter einem Winkel α zur Längsachse 11 des Durchgangskanals 6 liegt. Der Winkel α ist größer als 0° und liegt vorzugsweise im Bereich von 20° bis 80°.

Der Heizmittel-Austrittskanal 9 ist in einem Stutzen 12 angeordnet, der unter dem Winkel α zur Längsachse 11 des Durchgangskanals 6 gerichtet ist. Ein O-Ring 13 ist im Stutzen 12 vorgesehen. Der O-Ring 13 liegt dichtend am Heizmittel 8 an und verhindert einen Austritt von Fluid aus dem Heizmittel-Austrittskanal. Der O-Ring 13 wird mithilfe eines Stopfens 14 im Heizmittel-Austrittskanal 9 festgehalten, der im Stutzen 12 angeordnet ist. Der Stopfen 14 hält den O-Ring allerdings nur am Platz. Er verpresst ihn also nicht.

Wie oben erläutert, weist das Heizmittel 8 eine gewisse Eigensteifigkeit auf. Man benötigt also kein Hilfsmittel, um das Heizmittel 8, dessen Spitze im Wesentlichen entlang der Längsachse 11 durch den Durchgangskanal 6 geführt wird, so umzulenken, dass es durch den Heizmittel-Austrittskanal 9 austritt. Hierzu ist im Durchgangskanal 6 ein Rampenelement 15 angeordnet, das insbesondere in Fig. 2 zu erkennen ist. Das Rampenelement 15 ist einstückig mit dem Verbinder 2 ausgebildet. Wenn der Verbinder 2 als Spritzgussteil ausgebildet ist, dann wird das Rampenelement 15 beim Spritzgießen gleich mit erzeugt.

Das Rampenelement 15 weist eine Führungsfläche 16 auf, die gekrümmt ist, also knickfrei ausgebildet ist. Die Führungsfläche 16 erstreckt sich von der "Unterseite" des Durchgangskanals 6, also der Seite, die dem Heizmittel-Austrittskanal 9 gegenüberliegt, bis zum Heizmittel-Austrittskanal 9 und setzt sich in einer Wand des Heizmittel-Austrittskanals 9 fort. Die Spitze des Heizmittels 8 kann also auf der Führungsfläche 16 entlang gleiten, ohne durch Stufen, Knicke, Rillen oder dergleichen behindert zu werden. Wenn man das Heizmittel 8 durch den Anschlussstutzen 4 in den Durchgangskanal 6 einführt, dann wird die Spitze durch die Führungsfläche 16 des Rampenelements 15 so umgelenkt, dass sie automatisch in den Heizmittel-Austrittskanal 9 gelangt.

In der Ebene der Schnittansicht nach Fig. 1, also in einer Ebene, die durch die Längsachse 11 des Durchgangskanals 6 und die Längsachse 10 des Heizmittel-Austrittskanals 9 aufgespannt ist, füllt das Rampenelement 15 den Durchgangskanal 6 vollständig aus, siehe Fig. 1. Das Rampenelement 15 ist also an den beiden Enden der Führungsfläche 16 mit dem Gehäuse 17 des Verbinders 2 verbunden. Es besteht also nicht die Gefahr, dass das Rampenelement 15 kippt, wenn es durch die Spitze des Heizmittels 8 mit Kraft beaufschlagt wird. Wie insbesondere in Fig. 2 zu erkennen ist, füllt das Rampenelement 15 den Durchgangskanal 6 allerdings nicht vollständig aus. Vielmehr lässt es quer zu der in Fig. 1 gezeigten Ebene zwei Strömungsquerschnitte 18, 19 frei, durch die im Betrieb das Fluid nach wie vor strömen kann. Das Rampenelement 15 verringert den freien Querschnitt des Durchgangskanals 6 zwar etwas. Es lässt aber immer noch genügend Querschnitt für die Strömung des Fluids frei.

Es ist zu erkennen, dass die beiden Strömungsquerschnitte 18, 19 eine Breite aufweisen, die geringer ist als der Durchmesser des Heizmittels 8. Dementsprechend ist auf jeden Fall dafür gesorgt, dass das Heizmittel 8 durch die Führungsfläche 16 in Richtung auf den Heizmittel-Austrittskanal 9 umgelenkt wird, wenn das Heizmittel 8 in den Verbinder 2 eingeführt wird. Andererseits weist das Rampenelement 15 eine Breite auf, die maximal 50 % der größten Breite des Durchgangskanals 6 im Bereich des Rampenelements 15 entspricht.

Wenn das Heizmittel keinen kreisförmigen Querschnitt und dementsprechend keinen eigentlichen Durchmesser hat, dann ist die Breite des Heizmittels 8 in Breitenrichtung der Strömungsquerschnitte 18, 19 größer als die Breite der Strömungsquerschnitte 18, 19, so dass auch in diesem Fall zuverlässig sichergestellt ist, dass das Heizmittel beim Einschieben in den Verbinder durch das Rampenelement 15 umgelenkt wird.

Die Fertigung einer beheizbaren Fluidleitung 1 mit einem derartigen Verbinder 2 gestaltet sich relativ einfach. Man muss lediglich das Rohr 3 mit dem Heizmittel 8 vorkonfektionieren, so dass das Heizmittel 8 mit einer vorbestimmten Länge aus dem Rohr 3 herausragt. Bevor man also das Rohr 3 auf den Anschlussstutzen 4 aufschiebt, gelangt das Heizmittel 8 bereits in den Durchgangskanal 6 im Innern des Anschlussstutzens 4. Wenn dann das Rohr 3 und das Heizmittel 8 gemeinsam weiterbewegt werden, um das Rohr 3 auf den Anschlussstutzen 4 aufzuschieben, dann wird die Spitze des Heizmittels 8 durch die Führungsfläche 16 am Rampenelement 15 umgelenkt, so dass diese Spitze in den Heizmittel-Austrittskanal 9 gelangt und dort aus dem Verbinder 2 austreten kann.

Natürlich ist es auch möglich, zunächst das Heizmittel 8 alleine in den Verbinder 2 einzusetzen und dann das Rohr 3 über das Heizmittel 8 zu führen und auf den Anschlussstutzen 4 aufzuschieben.

Wie insbesondere in Fig. 1 zu erkennen ist, ist der Strömungsquerschnitt im Durchgangskanal 6 innerhalb des Anschlussstutzens 4 deutlich kleiner als der entsprechende Strömungsquerschnitt im Rohr 3. Wenn man beispielsweise einen Innendurchmesser des Rohres 3 von 6 mm annimmt und einen Innendurchmesser des Durchgangskanals 6 innerhalb des Anschlussstutzens 4 von 4,75 mm, dann ergibt sich bei Verwendung eines Heizstabes mit einem Durchmesser von 4 mm ein Strömungsquerschnitt innerhalb des Rohres von 10,5 mm² und ein Strömungsquerschnitt im Durchgangskanal 6 von 5,1 mm². Der Strömungsquerschnitt im Durchgangskanal 6 innerhalb des Anschlussstutzens 4 hat also nur knapp 49 % der Fläche des Strömungskanals innerhalb des Rohres 3.

Zwischen der inneren Umfangswand des Anschlussstutzens 4 und dem Heizmittel 8 ergibt sich, wenn der Heizstab 8 mittig angeordnet ist, ein Ringspalt mit einer Dicke von 0,375 mm. Dieser Ringspalt reicht aus, um eine ausreichende Menge an Harnstoff durch den Verbinder hindurch treten zu lassen. Der Heizstab 8 wird in vielen Fällen allerdings nicht mittig liegen. Aufgrund der dargestellten Dimensionierung weist der Spalt zwischen dem Anschlussstutzen 4 und dem Heizstab aber eine maximale Dicke von 0,75 mm auf, wenn der Heizstab 8 an der Innenwand des Anschlussstutzens 4 anliegt.

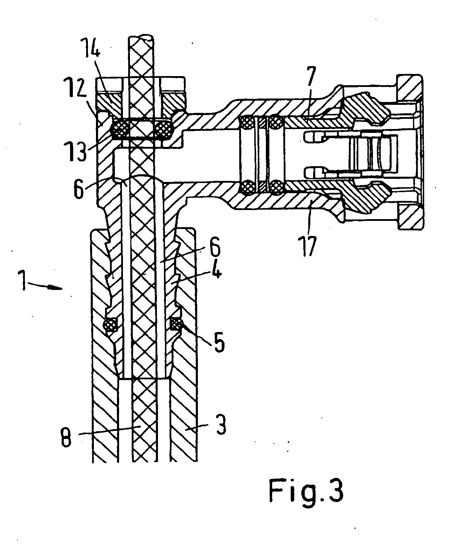

Fig. 3 zeigt eine abgewandelte Ausführungsform eines Verbinders. Gleiche und funktionsgleiche Elemente sind mit den gleichen Bezugszeichen wie in Fig. 1 und 2 versehen.

Während bei der Ausgestaltung nach Fig. 1 und 2 der Durchgangskanal geradlinig verläuft (ein derartiger Verbinder wird auch als "0°-Verbinder" bezeichnet) weist der Durchgangskanal 6 bei dem Verbinder 2 nach Fig. 3 eine Richtungsänderung um 90° auf. Ein derartiger Verbinder 2 wird auch als "90°-Verbinder" bezeichnet.

Auch hier ist zu erkennen, dass der Heizstab 8 den Durchgangskanal auf einem Teil seiner Länge so ausfüllt, dass der Strömungsquerschnitt innerhalb des Durchgangskanals 6 wesentlich kleiner ist als der Strömungsquerschnitt innerhalb des Rohres. Der Heizstab 8 ist hier geradlinig durch den Verbinder 2 hindurchgeführt, d.h. der Heizmittel-Austrittskanal setzt den Anschlussstutzen 4 geradlinig fort.

Das durch den Heizstab 8 nicht unmittelbar beheizte Volumen entspricht im Wesentlichen dem Volumen des Verbinders 2 nach den Fig. 1 und 2.

## Patentansprüche

1. Fluidleitung (1) mit einem Rohr (3), einem Verbinder (2), der einen Anschlussstutzen (4) aufweist und der an einem Ende des Rohres (3) angeordnet ist, und einer Heizeinrichtung (8), die zumindest einen Teil des Rohres (3) und zumindest einen Teil des Verbinders (2) beheizt, wobei der Anschlussstutzen (4) einen Teil eines Durchgangskanals (6) durch den Verbinder (2) umgibt, **dadurch gekennzeichnet, dass** der Durchgangskanal (6) zumindest auf einem Teil seiner Länge einen Strömungsquerschnitt aufweist, der maximal 60 % des Strömungsquerschnitts des Rohres (3) beträgt.

2. Fluidleitung nach Anspruch 1, **dadurch gekennzeichnet, dass** der Strömungsquerschnitt des Durchgangskanals (6) auf dem Teil der Länge maximal 50 % des Strömungsquerschnitts des Rohres (3) beträgt.

3. Fluidleitung nach Anspruch 1 oder 2, **dadurch gekennzeichnet, dass** die Heizeinrichtung als Heizstab (8) ausgebildet ist, der aus dem Rohr (3) in den Anschlussstutzen (4) des Verbinders (2) geführt ist und den Strömungsquerschnitt des Durchgangskanals (6) im Inneren des Anschlussstutzens (4) verringert.

4. Fluidleitung nach Anspruch 3, **dadurch gekennzeichnet, dass** der Heizstab (8) biegbar ausgebildet ist.

5. Fluidleitung nach Anspruch 3 oder 4, **dadurch gekennzeichnet, dass** der Verbinder, (2) einen Heizmittel-Austrittskanal (9) aufweist, der mit dem Durchgangskanal (6) einen Winkel ungleich 0° einschließt, wobei im Durchgangskanal (6) ein Rampenelement (15) angeordnet ist, das eine aus dem Durchgangskanal (6) zum Heizmittel-Austrittskanal (9) weisende Führungsfläche (16) aufweist und den Querschnitt des Durchgangskanals (6) jenseits des Anschlussstutzens (4) vermindert.

6. Fluidleitung nach Anspruch 5, **dadurch gekennzeichnet, dass** das Rampenelement (15) den Durchgangskanal (6) in einer Ebene, die durch den Durchgangskanal (6) und den Heizmittel-Austrittskanal (9) aufgespannt ist, den Durchgangskanal (6) ausfüllt und in einer Ebene senkrecht dazu einen Strömungsquerschnitt (18, 19) im Durchgangskanal (6) frei lässt.

7. Fluidleitung nach Anspruch 5 oder 6, **dadurch gekennzeichnet, dass** das Rampenelement (15) eine Breite aufweist, die maximal 50 % der größten Breite des Durchgangskanals (6) im Bereich des Rampenelements (15) entspricht.

8. Fluidleitung nach einem der Ansprüche 5 bis 7, **dadurch gekennzeichnet, dass** das Rampenelement (15) einstückig mit dem Verbinder (2) ausgebildet ist.

9. Fluidleitung nach einem der Ansprüche 3 bis 8, **dadurch gekennzeichnet, dass** zwischen einer dem Durchgangskanal (6) innerhalb des Anschlussstutzens (4) begrenzten Umfangswand und dem Heizstab (8) ein Spalt mit einer maximalen Erstreckung von 1 mm senkrecht zu einer Achse des Durchgangskanals (6) vorgesehen ist.

## Claims

1. A fluid line (1), comprising: a pipe (3); a connector (2) having a pipe connection (4) arranged at one end of the pipe (3), and a through-channel (6) through the connector (2), wherein the pipe connection (4) surrounds a portion of the through-channel (6); and a heater (8) structured and arranged within the pipe (3) and the connector (2) to heat at least a portion of the pipe (3) and at least a portion of the connector (2), **characterized in that** a flow cross section of the through-channel (6) at least on a part of its length is no more than 60% of a flow cross section of the pipe (3).

2. The fluid line according to claim 1, **characterized in that** the flow cross section of the through-channel (6) on the part of the length is no more than 50% of the flow cross section of the pipe (3).

3. The fluid line according to claim 1 or 2, **characterized in that** the heater (8) is embodied as a heater rod, which extends out of the pipe (3) into the pipe connection (4) of the connector (2) and reduces the flow cross section at least in the portion of the through-channel (6) surrounded by the pipe connection (4).

4. The fluid line according to claim 3, **characterized in that** the heater rod (8) is embodied in a bendable manner.

5. The fluid line according to claim 3 or 4, **characterized in that** the connector (2) further comprises: a heater outlet channel (9) that forms an angle unequal to 0° with the through-channel (6); and a ramp element (15) having a guide surface (16) arranged in the through-channel (6), wherein the guide surface (16) points out of the through-channel (6) to the heater outlet channel (9), and reduces the cross section of the through-channel (6) on another side of the pipe connection (4).

6. The fluid line according to claim 5, **characterized in that** the ramp element (15) is arranged to span the through-channel (6) in a plane passing through the through-channel (6) and the heater outlet channel (9), while defining a flow cross-section in the through-channel (6) in a plane perpendicular to the plane passing through the through-channel (6) and the heater outlet channel (9).

7. The fluid line according to claim 5 or 6, **characterized in that** the ramp element (15) comprises a width that corresponds to no more than 50% of a largest width of the through-channel (6) in a region of the ramp element (15).

8. The fluid line according to any of the claims 5 to 7, **characterized in that** the ramp element (15) is embodied in one piece with the connector (2).

9. The fluid line according to any of the claims 3 to 8, **characterized in that** a gap with a maximum extension of 1 mm perpendicular to an axis of the through-channel (6) is defined between a circumferential wall delimiting the through-channel (6) within the pipe connection (4) and the heater rod (8).

## Revendications

1. Conduite de fluide (1) avec un tuyau (3), avec un raccord (2), qui comporte un embout de raccordement (4) et qui est agencé à une extrémité du tuyau (3), et avec un dispositif de chauffage (8), qui chauffe au moins une partie du tuyau (3) et au moins une partie du raccord (2), l'embout de raccordement (4) entourant une partie d'un canal de passage (6) à travers le raccord (2), **caractérisée en ce que** le canal de passage (6) comporte, au moins sur une partie de sa longueur, une section de flux qui vaut au maximum 60 % de la section de flux du tuyau (3).

2. Conduite de fluide selon la revendication 1, **caractérisée en ce que** la section de flux du canal de passage (6) vaut, sur la partie de la longueur, au maximum 50 % de la section de flux du tuyau (3).

3. Conduite de fluide selon la revendication 1 ou 2, **caractérisée en ce que** le dispositif de chauffage est conçu comme une barre chauffante (8) qui est guidée à partir du tuyau (3) jusque dans l'embout de raccordement (4) du raccord (2) et qui réduit la section de flux du canal de passage (6) à l'intérieur de l'embout de raccordement (4).

4. Conduite de fluide selon la revendication 3, **caractérisée en ce que** la barre chauffante (8) est conçue flexible.

5. Conduite de fluide selon la revendication 3 ou 4, **caractérisé en ce que** le raccord (2) comporte un canal de sortie d'agent de chauffage (9) qui forme un angle différent de 0° avec le canal de passage (6), un élément en rampe (15) étant agencé dans le canal de passage (6), lequel élément en rampe comporte une surface de guidage (16) dirigée du canal de passage (6) au canal de sortie d'agent de chauffage (9) et réduit la section du canal de passage (6) au-delà de l'embout de raccordement (4).

6. Conduite de fluide selon la revendication 5, **caractérisée en ce que** l'élément en rampe (15) remplit le canal de passage (6) dans un plan qui passe par le canal de passage (6) et par le canal de sortie d'agent de chauffage (9) et qui laisse libre dans le canal de passage (6) une section de flux (18, 19) dans un plan perpendiculaire (6) au précédent.

7. Conduite de fluide selon la revendication 5 ou 6, **caractérisée en ce que** l'élément en rampe (15) a une largeur qui correspond au maximum à 50 % de la plus grande largeur du canal de passage (6) dans la zone de l'élément à rampe (15).

8. Conduite de fluide selon l'une des revendications 5 à 7, **caractérisée en ce que** l'élément en rampe (15) est conçu d'une seule pièce avec le raccord (2).

9. Conduite de fluide selon l'une des revendications 3 à 8, **caractérisée en ce qu'**il est prévu entre une paroi circonférentielle délimitant le canal de passage (6) à l'intérieur de l'embout de raccordement (4) et la barre de chauffage (8) une fente qui a une dimension maximale de 1 mm perpendiculairement à un axe du canal de passage (6).
